# EUROPÄISCHE PATENTSCHRIFT

(11) **EP 2 613 907 B1**
(45) Veröffentlichungstag und Bekanntmachung des Hinweises auf die Patenterteilung: **01.03.2017**
(21) Anmeldenummer: 11741123.1
(22) Anmeldetag: 05.08.2011
(51) Int. Cl.: B23K 31/02, B23K 37/04, F16B 5/06, F16B 5/07, F16B 5/08, F16B 21/09

(54) **BAUTEILVERBINDUNG MIT EINEM ERSTEN UND EINEM ZWEITEN BAUTEIL UND EINEM MÄNNLICHEN UND EINEM WEIBLICHEN FIXIERELEMENT**
COMPONENT CONNECTION COMPRISING A FIRST AND A SECOND COMPONENT AND A MALE AND A FEMALE FIXING ELEMENT
ASSEMBLAGE DE PIÈCES COMPORTANT UNE PREMIÈRE PIÈCE ET UNE SECONDE PIÈCE, ET UN ÉLÉMENT DE FIXATION MÂLE ET UN ÉLÉMENT DE FIXATION FEMELLE

(30) Priorität: 10.09.2010 DE 102010040547
(43) Veröffentlichungstag der Anmeldung: 17.07.2013
(73) Patentinhaber: Bayerische Motoren Werke Aktiengesellschaft, 80809 München (DE)
(72) Erfinder: MANTEI, Ingo, 80804 München (DE); VAN NIEKERK, Johann, 80993 München (DE)
(86) Internationale Anmeldenummer: PCT/EP2011/003931
(87) Internationale Veröffentlichungsnummer: WO 2012/031652

(56) Entgegenhaltungen:
- EP-A1- 0 434 447
- BE-A- 414 895
- DE-A1-102007 044 635
- DE-A1-102008 038 747
- DE-A1-102010 015 179
- FR-A1- 2 761 626
- US-A- 4 637 116
- US-A- 5 642 641

## Beschreibung

Die vorliegende Erfindung betrifft eine Bauteilverbindung gemäß dem Oberbegriff des Patentanspruches 1 (siehe, z.B., US 4,637,116 A)

Eine derartige Bauteilverbindung ist aus der älteren, nicht vorveröffentlichten deutschen Patentanmeldung DE 10 2010 051 179 A1 bekannt. Zum technischen Hintergrund der vorliegenden Erfindung zählen die BE 414895 A, EP 0 434 447, EP 0 434 447 A1, US 5,642,641 A, US 4,637,116 A, FR 2 761 626 A1, DE 10 2007 044 635 A1, DE 10 2009 049 602.5, DE 10 2008 038 747 A1, DE 10 2009 041 161 A1, DE 10 2010 028 322 A1 sowie die DE 10 2007 044 635 A1.

In der Großserienfertigung von Fahrzeugkarosserien werden eine Vielzahleinzelner Karosserieteile sowie Anbauteile, wie z. B. Halterungen etc. weitgehend vollautomatisiert zusammengebaut. Bei einem Fügevorgang werden zwei oder mehrere Karosserieteile zunächst mittels aufwendiger Spann- und Aufnahmetechnik relativ zueinander positioniert und anschließend miteinander verbunden, z. B. durch Schweißen, Clinchen oder andere Fügeverfahren.

Bei der oben erwähnten DE 10 2009 049 602.5 geht es um die lose Vorfixierung zweier fest miteinander zu verbindender Bauteile. An dem einen Bauteil ist ein abstehendes kugelförmiges Formschlusselement vorgesehen, das in eine z. B. schlüssellochartig gestaltete Ausnehmung des zweiten Bauteils eingreift. Die miteinander zu verbindenden Bauteile werden zusammengesetzt und anschließend relativ zueinander verschoben, wobei sich durch das Verschieben ein Formschluss ergibt. Durch den Formschluss werden die beiden Bauteile relativ zueinander vorfixiert und können anschließend fest miteinander verbunden werden, z. B. durch Schweißen. Aufgabe der Erfindung ist es, eine Bauteilverbindung zu schaffen, mittels der Bauteile, insbesondere Karosseriebauteile von Fahrzeugen sowie Anbauteile, sehr einfach (vor-)montiert werden können. Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Bauteilverbindung, die in Anspruch 1 definiert ist, welche ein erstes Bauteil, bei dem es sich um ein erstes Fahrzeugbauteil handeln kann, mit einem zweiten Bauteil, bei dem es sich um ein zweites Fahrzeugbauteil handeln kann, verbindet. Der Begriff "Fahrzeugbauteil" ist äußerst breit zu interpretieren. Er umfasst prinzipiell alle Arten von Bauteilen, die es bei einem Fahrzeug zu verbinden gilt, insbesondere Karosseriebauteile. Wenn im Folgenden von einem "Fahrzeugbauteil" die Rede ist, so ist dies nicht einschränkend zu interpretieren. Die Erfindung ist vielmehr ganz allgemein zur Verbindung von Bauteilen (auch in anderen Industriezweigen) zu verstehen. Dementsprechend breit sind die Patentansprüche zu interpretieren.

Das erste der beiden (Fahrzeug-)Bauteile weist ein vom ersten (Fahrzeug-)Bauteil abstehendes, "männliches Fixierelement" auf, das einen Funktionskopf und einen damit verbundenen Fußbereich aufweist. Der Funktionskopf und der Fußbereich können einstückig miteinander verbunden sein.

Der Funktionskopf hat teilweise oder ganz die Form einer Kugel bzw. einer Kalotte oder ganz oder teilweise eine kugelähnliche Form. Der Begriff "kugelähnlich" ist ebenfalls sehr breit zu interpretieren und nicht auf den mathematischen Begriff einer Kugelgeometrie beschränkt. Kugelähnlich kann z.B. "konvex gewölbt" bedeuten. Vorzugsweise ist das kugelförmige oder kugelähnlich gestaltete männliche Fixierelement rotationssymmetrisch bezüglich einer Normalenrichtung eines oder beider Fahrzeugbauteile an der Stelle des männlichen Fixierelements. Die Begriffe "kugelartig" oder "kugelähnlich" umfassen ganz allgemein "runde" bzw. "gewölbte", insbesondere "konvex gewölbte" Geometrien".

Der Fußbereich hat, ganz allgemein gesprochen, die Funktion eines Verbindungselements, über welches der Funktionskopf mit dem ersten Bauteil verbunden ist bzw. verbunden wird. Er kann so gestaltet sein, dass er Mittels eines kalten Fügeverfahrens mit dem zweiten Bauteil verbindbar ist. Der Fußbereich ist gemäß der Erfindung kostengünstig als "Einpresselement" ausgebildet. Er wird gemäß der Erfindung mit gängigen Einpressverfahren (wie z.B. Stanznieten) hochpräuise in das zweite Bauteil "eingepresst", derart, dass sich durch das Einpressen eine unlösbare, d.h. dauerhaft feste, formschlüssige Verbindung mit dem ersten Bauteil ergibt. Der Fußbereich kann z.B. als selbststanzender Niet ausgeführt sein. Das Einpressen des Fußabschnitts kann vollautomatisiert mittels einer entsprechenden Robotereinrichtung durchgeführt werden. Alternativ dazu kann eine Einpresseinrichtung in ein Umformwerkzeug integriert sein. Beispielsweise kann in ein Tiefziehwerkzeug eine Stanznieteinrichtung integriert sein, was es ermöglicht, während oder gegen Ende eines Tiefziehvorgangs, durch den das erste (Blech-)Bauteil dreidimensional umgeformt wird, das männliche Fixierelement zu setzen.

Ein derart gestaltetes männliches Fixierelement kann sehr einfach über den Funktionskopf mit dem zweiten (Fahrzeug-)Bauteil zusammengesteckt werden. Durch eine runde, kantenlose Geometrie des männlichen Fixierelements minimiert sich die Gefahr, dass sich die beiden (Fahrzeug-)bauteile beim Zusammenstecken ungewollt verkannten.

Das zweite (Fahrzeug-)Bauteil weist ein zur Aufnahme des männlichen Fixierelements vorgesehenes "weibliches Fixierelement" auf. Der Begriff "weibliches Fixierelement" ist ebenfalls äußerst breit auszulegen. Gemeint sind konstruktive Gestaltungen, die es ermöglichen, das männliche Fixierelement in einer Einführrichtung in das weibliche Fixierelement einzuführen. Genauer gesagt nimmt das weibliche Fixierelement nicht das gesamte männliche Fixierelement auf, sondern lediglich den von dem ersten Bauteil abstehenden Teil des männlichen Fixierelements, im Wesentlichen also dessen Funktionskopf.

Der Funktionskopf des männlichen Fixierelements weist ein Übermaß in Bezug auf das weibliche Fixierelement auf. Das Übermaß kann insbesondere in einer Richtung, die quer zur Einführrichtung ist, bestehen. Aufgrund des Übermaßes werden die beiden (Fahrzeug-)bauteile beim Zusammenstecken an den Fixierelementen lösbar aneinandergeklemmt.

Die (Fahrzeug-)Bauteile können also, ähnlich wie dies von Steckbaukästen aus dem Spielwarenbereich bekannt ist, einfach zusammengesteckt und auf diese Weise relativ zueinander (vor-)fixiert werden.

(Fahrzeug-)Bauteile, wie z.B. einzelne Karosserieteile, können durch ein oder mehrere derartige Bauteilverbindungen miteinander verbunden, d.h. (vor-)montiert werden. Die einzelnen Bauteile brauchen dabei lediglich "zusammengesteckt" werden. Je nach Art der (Fahrzeug-)Bauteile und der konstruktiv vorgesehenen "Klemmkraft" können die beiden (Fahrzeug-)Bauteile ausschließlich über die erfindungsgemäße Bauteilverbindung miteinander verbunden sein oder zusätzlich über eine oder mehrere andere Verbindungstechniken, wie z.B. Schweißen, Schrauben, Nieten, Clinchen etc. In Betracht kommen dabei insbesondere auch solche Verbindungstechniken, die von einer einzigen Bauteilseite her herstellbar sind ("einseitige Verbindungsverfahren"). Exemplarisch sei hier das Laserschweißen genannt, bei dem im Unterschied zu Punktschweißverfahren der "Bauteilverbund" nicht von beiden Seiten her mittels einer Schweißzange zugänglich sein muss, sondern von einer einzigen Seite her gearbeitet werden kann.

Ein Formschluss in Einführrichtung zwischen den Fixierelementen kann vorgesehen sein. Ein derartiger Formschluss muss aber nicht notwendigerweise vorgesehen sein. Anders ausgedrückt muss nicht unbedingt ein Hinterschnitt des männlichen und des weiblichen Fixierelements vorgesehen sein.

Das weibliche Fixierelement kann durch ein in dem zweiten (Fahrzeug-)Bauteil vorgesehenes "Durchgangsloch" gebildet sein. Der Begriff "Durchgangsloch" ist breit zu interpretieren und nicht per se auf eine bestimmte Lochgeometrie beschränkt. Das Durchgangsloch kann z.B. kreisförmig sein oder eine von einer Kreisform abweichende Geometrie aufweisen, wie z.B. eine im Wesentlichen quadratische Geometrie, eine drei-, vier- oder mehreckförmige Geometrie, wobei die "Ecken" gerundet sein können.

Da der Funktionskopf des männlichen Fixierelements quer zur Einführrichtung ein gewisses Übermaß in Bezug auf das weibliche Fixier-element aufweist, müssen die beiden Fixierelemente - oder zumindest eines der beiden Fixierelemente - eine gewisse "Mindestelastizität" aufweisen, so dass das Zusammenstecken ermöglicht wird und nach dem Zusammenstecken eine hinreichende Klemmkraft bestehen bleibt.

Bei dem Funktionskopf des männlichen Fixierelements kann es sich z.B. um eine Kugel aus Vollmaterial handeln, insbesondere um eine Stahl- oder Aluminiumkugel. Eine derartige "Vollkugel" weist eine vergleichsweise geringe Elastizität auf. Die für ein Zusammenstecken erforderliche Mindestelastizität kann dann durch eine entsprechende Gestaltung des weiblichen Fixierelements erreicht werden.

Es kann vorgesehen sein, dass die beiden (Fahrzeug-)Bauteile nach dem Zusammenstecken an den Fixierelementen in Richtungen, die quer zur Einführrichtung sind, spielfrei miteinander verbunden, d.h. unverschieblich relativ zueinander fixiert sind.

Wie bereits erwähnt, können die beiden (Fahrzeug-)Bauteile über mehrere derartige oder ähnliche Bauteilverbindungen relativ zueinander (vor-)fixiert werden. Dementsprechend kann an einem der beiden (Fahrzeug-)Bauteile mindestens ein weiteres derartiges (siehe vorangegangene Beschreibung) männliches Fixierelement vorgesehen sein, das ebenfalls teilweise oder ganz die Form einer Kugel bzw. teilweise oder ganz eine kugelähnliche Form hat und das in einer bzw. in derselben Einführrichtung wie das erste männliche Fixierelement in ein zugeordnetes weiteres weibliches Fixierelement eingeführt werden kann bzw. eingeführt ist, das an dem betreffenden anderen (Fahrzeug-)Bauteil vorgesehen ist.

Das mindestens eine weitere weibliche Fixierelement kann durch einen Schlitz bzw. durch ein längliches Durchgangsloch gebildet sein, in dem ein Funtionskopf des weiteren männlichen Fixierelements in einer Längsrichtung des Schlitzes bzw. des länglichen Durchgangslochs verschieblich ist.

Anschaulich gesprochen bildet somit die eine "Bauteilverbindung" ein "Festlager" und die mindestens eine weitere Bauteilverbindung ein "Loslager". Dies hat den Vorteil, dass die beiden miteinander zu verbindenden (Fahrzeug-)Bauteile "schwimmend" und somit im Wesentlichen spannungsfrei zusammengesteckt bzw. aneinander fixiert werden können.

Nach einer Weiterbildung der Erfindung ist an einem Rand des das weibliche Fixierelement bildenden Durchgangslochs mindestens ein von dem zweiten (Fahrzeug-)Bauteil abstehendes, biegeelastisches Klemmelement vorgesehen. Das Klemmelement übt von außen her eine im Wesentlichen quer zur Einführrichtung wirkende Klemmkraft auf eine Außenseite des Funktionskopfs des männlichen Fixierelements aus. Das Klemmelement kann den Funktionskopf des männlichen Fixierelements hintergreifen. Dies muss aber nicht unbedingt der Fall sein. Im Falle eines Hinterschnitts kommt es beim Zusammenfügen, d.h. beim Zusammenstecken der beiden Fixierelemente zu einem "Überdrücken" und somit zu einem hörbaren Einrasten des Funktionskopfs des männlichen Fixierelements in bzw. an dem weiblichen Fixierelement.

Bei dem Klemmelement kann es sich um einen sich entlang des gesamten Rands des Durchgangslochs erstreckenden Klemmkragen handeln. Alternativ dazu kann auch lediglich ein sich über einen Umfangsabschnitt erstreckendes Klemmkragenelement vorgesehen sein. Ferner können entlang des Durchgangslochs mehrere in Umfangsrichtung voneinander beabstandete Klemmkrägen vorgesehen sein, die den Funktionskopf des männlichen Fixierelements jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen den Funktionskopf des männlichen Fixierelements drückt.

Es kann vorgesehen sein, dass der Klemmkragen bzw. die Klemmkrägen in Einführrichtung bzw. entgegen der Einführrichtung von dem zweiten (Fahrzeug-)Bauteil absteht bzw. abstehen. Der mindestens eine Klemmkragen muss nicht ganz senkrecht in Bezug auf das zweite Fahrzeugteil umgebogen werden, sondern kann leicht schräg angestellt werden. Beispielsweise kann vorgesehen sein, dass der mindestens eine Klemmkragen mit der Oberfläche des zweiten (Fahrzeug-)Bauteils im Bereich des Durchgangslochs einen Winkel im Bereich einschließt, der im Bereich zwischen 80° und 90° liegt.

Bei dem ersten und/oder bei dem zweiten (Fahrzeug-)Bauteil kann es sich um ein Blechbauteil, insbesondere um ein Karosseriebauteil handeln. Alternativ dazu kann es sich bei dem ersten und/oder bei dem zweiten (Fahrzeug-)Bauteil auch um ein Kunststoffbauteil, insbesondere um eine aus einem faserverstärkten Kunststoff bestehendes Kunststoffbauteil handeln. Das das weibliche Fixierelement bildende Durchgangsloch kann aus dem zweiten (Fahrzeug-)Bauteil ausgestanzt sein. Bei dem Klemmkragen kann es sich um einen "umgebogenen" bzw. "hochgestellten" oder hochstehenden Abschnitt des ausgestanzten Durchgangslochs handeln.

Bei einem oder bei beiden der Fahrzeugteile kann es sich insbesondere um Tiefziehteile handeln. Das mindestens eine weibliche Fixierelement, das z.B. durch ein Durchgangsloch gebildet sein kann, kann unmittelbar im Tiefziehwerkzeug ausgestanzt oder in einem nachfolgenden Fertigungsschritt hergestellt werden.

Im Folgenden wird die Erfindung im Zusammenhang mit der Zeichnung näher erläutert. Es zeigen:
- Figur 1: Ein Blech mit einer aufgeschweißten Stahlkugel;
- Figuren 2, 3: ein Blech mit einem Durchgangsloch mit umlaufenden Klemmkragen;
- Figuren 4-6: verschiedene Beispiele mit unterschiedlichen Klemmkrägen;
- Figur 7: zwei schwimmend aneinander fixierte Bauteile gemäß der Erfindung;
- Figur 8: ein erstes Ausführungsbeispiel eines männlichen Fixierelements gemäß der Erfindung; und
- Figur 9: ein zweites Ausführungsbeispiel eines männlichen Fixierelements gemäß der Erfindung.

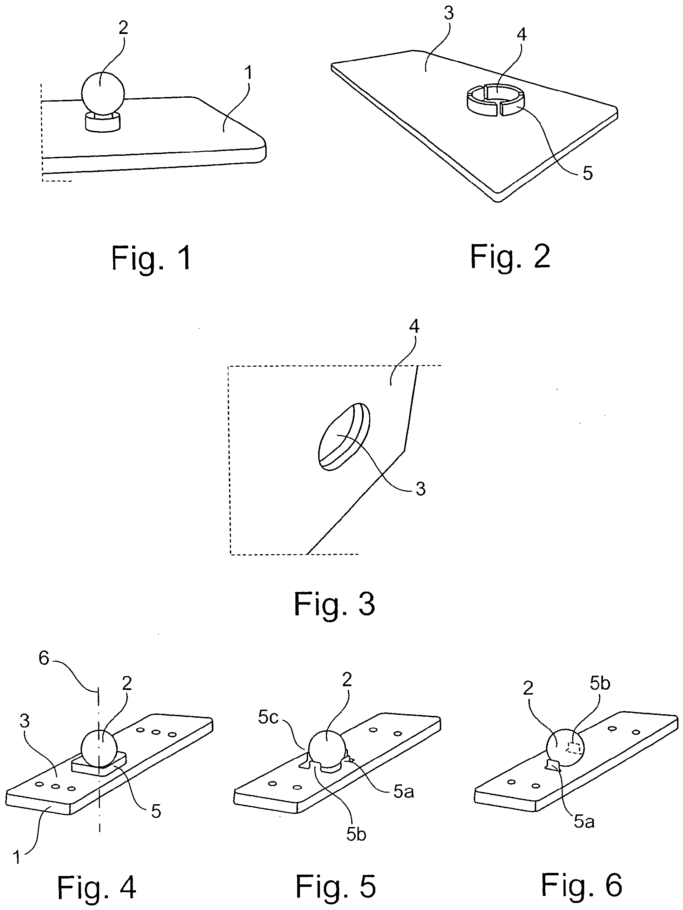

Figur 1 zeigt ein erstes Blech 1, auf dem ein männliches Fixierelement fixiert ist, das einen als Stahlkugel 2 ausgebildeten Funktionskopf aufweist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die den Funktionskopf bildende Kugel 2. Der Klemmkragen ist jedoch hinreichend elastisch, so dass die Kugel 2 in bzw. durch das Durchgangsloch 4 gedrückt werden kann.

Das Durchgangsloch 4 kann, wie in den Figuren 2, 3 gezeigt, eine annähernd viereckige bzw. quadratische Form haben. Im Falle einer annähernd quadratischen Druchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Beispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Beispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

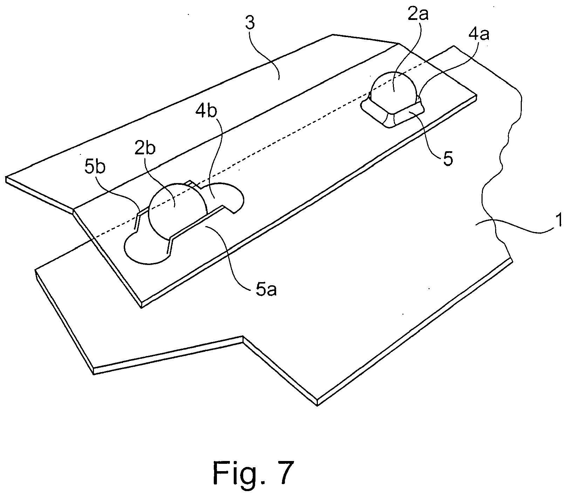

Figur 7 zeigt ein Ausführungsbeispiel, bei dem auf einem ersten Blech 1 beabstandet voneinander eine erste Kugel 2a und eine zweite Kugel 2b angeordnet sind. Die beiden Kugeln 2a, 2b sind jeweils über einem hier nicht näher zu erkennenden Fußbereich des jeweiligen männlichen Fixierelements mit dem Blech 1 verbunden. Die Fußbereiche bzw. Fußabschnitte können z.B. über kalte Fügeverfahren mit dem Blech 1 verbunden worden sein. In Betracht kommen verschiedenste Arten von "Einpressverfahren", wie z.B. Stanznietverfahren.

In dem zweiten Blech 3 ist ein erstes der Kugel 2a zugeordnetes rechteckiges bzw. quadratisches Durchgangsloch 4a vorgesehen, das einen umlaufenden Klemmkragen 5 aufweist, ähnlich wie er in den Figuren 2 - 4 gezeigt ist. Im Bereich der Kugel 2a sind die beiden Bleche 1, 3 somit fest quer zur Einführrichtung relativ zueinander fixiert.

Bei dem zweiten Durchgangsloch 4b hingegen handelt es sich um ein längliches Durchgangsloch, mit zwei in Lochlängsrichtung verlaufenden Klemmkrägen 5a, 5b, die voneinander gegenüberliegenden Seiten her gegen die Außenseite der Kugel 2b drücken. Bei der in Figur 7 gezeigten Anordnung sind die Bleche "schwimmend" aneinander fixiert. Durch das Langloch 4b werden Spannungen zwischen den Befestigungsstellen vermieden.

Die beiden Bleche 1, 3 können einfach zusammengesteckt und anschließend z.B. durch Schweißen dauerhaft fest miteinander verbunden werden. Die beim Schweißen auftretenden Wärmedehnungen werden aufgrund der schwimmenden Anordnung der beiden Bleche "automatisch" ausgeglichen.

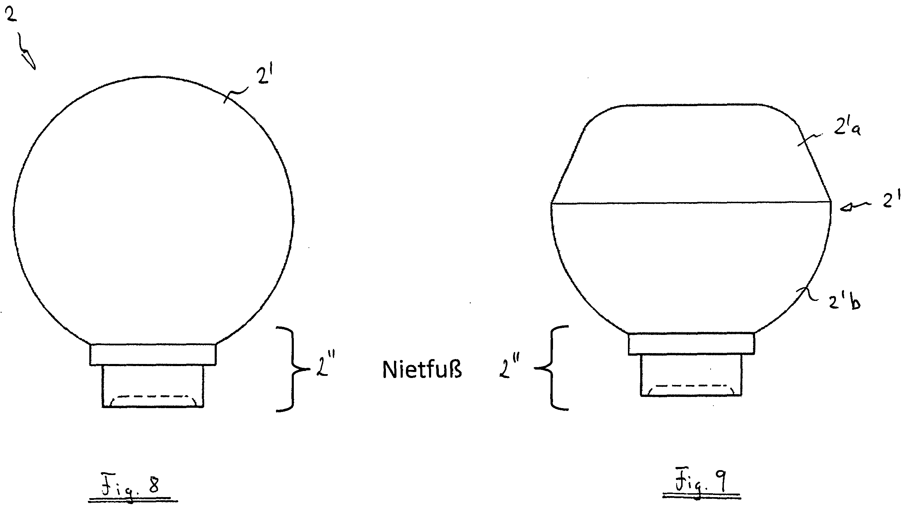

Figur 8 zeigt ein männliches Fixierelement 2, welches einen kugelförmigen Funktionskopf 2' und einen einstückig damit verbundenen Fußbereich bzw. Fußabschnitt 2" aufweist. Der Fußbereich 2" ist hier in der Form eines (selbststanzenden) Stanzniets ausgebildet. Beim Setzen, d.h. beim Einpressen des als Stanzniet ausgebildeten Fußbereichs 2", dringt der stirnseitige Bereich des Fußbereichs 2" in das erste Blech 1 (vgl. Figur 1) ein und weitet sich dabei radial auf, wodurch sich eine dauerhaft feste, formschlüssige Verbindung mit dem ersten Blech 1 ergibt.

Figur 9 zeigt ein Ausführungsbeispiel, bei dem der Funktionskopf 2' einen oberen, konisch nach oben hin zulaufenden, gerundeten Bereich 2'a und einen sich nach unten daran anschließenden kugelförmigen Bereich 2'b aufweist, der analog zum Ausführungsbeispiel der Figur 8 als Stanzniet ausgebildet ist.

## Patentansprüche

1. Bauteilverbindüng, mit
- einem ersten Bauteil (1), insbesondere einem ersten Fahrzeugbauteil, das ein von dem ersten Bauteil (1) abstehendes, männliches Fixierelement (2) aufweist,
- einem zweiten Bauteil (3), insbesondere einem zweiten Fahrzeugbauteil (3), das ein zur Aufnahme des männlichen Fixierelements (2) vorgesehenes weibliches Fixierelement (4, 5) aufweist, wobei das männliche Fixierelement (2) in einer Einführrichtung (6) in das weibliche Fixierelement (4, 5) eingeführt ist, wobei
- das männliche Fixierelement (2) teilweise die Form einer Kugel hat und im Wesentlichen quer zur Einführrichtung (6) ein Übermaß in Bezug auf das weibliche Fixierelement (4, 5) aufweist, so dass die beiden Bauteile (1, 3) an den Fixierelementen (2, 4, 5) aneinander geklemmt sind, **dadurch gekennzeichnet, dass** das Fixierelement (2) einen Funktionskopf und einen Fußbereich aufweist,
wobei
- der Fußbereich formschlüssig mit dem ersten Bauteil (1) verbunden ist,
wobei
der Fußbereich in das erste Bauteil (1) eingepresst ist.

2. Bauteilverbindung nach Anspruch 1,
**dadurch gekennzeichnet, dass** weibliche Fixierelement (4, 5) durch ein in dem zweiten Bauteil (3) vorgesehenes Durchgangsloch (4) gebildet ist.

3. Bauteilverbindung nach Anspruch 2,
**dadurch gekennzeichnet, dass** das Durchgangsloch (4) eine von einer Kreisform abweichende Form hat.

4. Bauteilverbindung nach einem der Ansprüche 2 oder 3,
**dadurch gekennzeichnet, dass** die Form des Durchgangslochs (4) einem Quadrat oder einem Dreieck ähnelt.

5. Bauteilverbindung nach einem der Ansprüche 1 bis 4,
**dadurch gekennzeichnet, dass** die beiden Bauteile (1, 3) im Bereich der beiden Fixierelemente in Richtungen quer zur Einführrichtung (6) unverschieblich relativ zueinander fixiert sind.

6. Bauteilverbindung nach einem der Ansprüche 1 bis 5,
**dadurch gekennzeichnet, dass** ein weiteres männliches Fixierelement (2b) vorgesehen ist, das teilweise oder ganz die Form einer Kugel oder teilweise oder ganz eine kugelähnliche Form hat und das in einer bzw. in derselben Einführrichtung (6) ein zugeordnetes weiteres weibliches Fixierelement (4b) eingeführt ist.

7. Bauteilverbindung nach Anspruch 6,
**dadurch gekennzeichnet, dass** das weitere weibliche Fixierelement (4b) durch einen Schlitz, bzw. durch ein längliches Durchgangsloch gebildet ist, in dem das weitere männliche Fixierelement (2b) in einer Längsrichtung des Schlitzes bzw. des länglichen Durchgangsloch verschiebbar ist.

8. Bauteilverbindung nach einem der Ansprüche 2 bis 7,
**dadurch gekennzeichnet, dass** an einem Rand des Durchgangslochs (4, 4a, 4b) mindestens ein von dem zweiten Bauteil (3) abstehendes, biegeelastisches Klemmelement (5, 5a, 5b, 5c) vorgesehen ist, das von außen her eine im Wesentlichen quer zur Einführrichtung (6) wirkende Klemmkraft auf eine Außenseite des männlichen Fixierelements (2, 2a, 2b) ausübt.

9. Bauteilverbindung nach Anspruch 8,
**dadurch gekennzeichnet, dass** das Klemmelement (5, 5a, 5b, 5c) das männliche Fixierelement (2, 2a, 2b) hintergreift.

10. Bauteilverbindung nach einem der Ansprüche 8 oder 9,
**dadurch gekennzeichnet, dass** es sich bei dem Klemmelement (5) um einen sich entlang des gesamten Rands des Durchgangslochs (4) erstreckenden Klemmkragen (5) handelt.

11. Bauteilverbindung nach einem der Ansprüche 8 oder 9,
**dadurch gekennzeichnet, dass** entlang des Rands des Durchgangslochs (5) mehrere in Umfangsrichtung voneinander beabstandete Klemmkrägen (5a, 5b, 5c) vorgesehen sind, die auf einem Umfangsabschnitt das männliche Fixierelement (2, 2a, 2b) von außen her berühren.

12. Bauteilverbindung nach einem der Ansprüche 8 bis 11,
**dadurch gekennzeichnet, dass** der Klemmkragen bzw. die Klemmkrägen (5, 5a, 5b, 5c) in Einführrichtung (6) bzw. entgegen der Einführrichtung (6) von dem zweiten Bauteil (3) absteht bzw. abstehen.

13. Bauteilverbindung nach einem der Ansprüche 1 bis 12,
**dadurch gekennzeichnet, dass** es sich bei dem ersten und/oder bei dem zweiten Bauteil um ein Blechbauteil, insbesondere um ein Stahl-oder Aluminiumblechbauteil, handelt.

14. Bauteilverbindung nach einem der Ansprüche 1 bis 13,
**dadurch gekennzeichnet, dass** es sich bei dem ersten und/oder bei dem zweiten Bauteil um ein Karosseriebauteil handelt.

15. Bauteilverbindung nach einem der Ansprüche 2 bis 14,
**dadurch gekennzeichnet, dass** das Durchgangsloch (4, 4a, 4b) aus dem zweiten Bauteil (3) ausgestanzt ist.

16. Bauteilverbindung nach einem der Ansprüche 8 bis 15,
**dadurch gekennzeichnet, dass** es sich bei dem mindestens einen Klemmkragen (5, 5a, 5b, 5c) um einen umgebogenen Abschnitt des zweiten Bauteils (3) handelt.

17. Bauteilverbindung nach einem Ansprüche 1 bis 16,
**dadurch gekennzeichnet, dass** es sich bei dem männlichen Fixier-element um ein vollständig aus Metall, insbesondere aus Stahl oder Aluminium bestehendes Element handelt.

18. Bauteilverbindung nach einem der Ansprüche 1 bis 17,
**dadurch gekennzeichnet, dass** die beiden Bauteile (1, 3) zusätzlich zu der mindestens einen lösbaren Klemmverbindung über eine weitere Verbindung, insbesondere über eine Schweißverbindung, unmittelbar fest miteinander verbunden sind.

## Claims

1. A component connection, comprising
- a first component (1), especially a first vehicle component which has a male fixing element (2) projecting from the first component (1),
- a second component (3), especially a second vehicle component (3) which has a female fixing element (4, 5), provided for receiving the male fixing element (2), wherein the male fixing element (2) is introduced into the female fixing element (4, 5) in an insertion direction (6), wherein
- the male fixing element (2) partly has the shape of a sphere and has an oversize in respect of the female fixing element (4, 5) substantially transversely to the insertion direction (6), so that the two components (1, 3) are clamped against each other at the fixing elements (2, 4, 5), **characterised in that** the fixing element (2) has a functional head and a foot region, wherein
- the foot region is positively connected to the first component (1), wherein the foot region is pressed into the first component (1).

2. A component connection according to claim 1,
**characterised in that** the female fixing element (4, 5) is formed by a through hole (4) which is provided in the second component (3).

3. A component connection according to claim 2,
**characterised in that** the through hole (4) has a shape which differs from a circular shape.

4. A component connection according to either claim 2 or claim 3,
**characterised in that** the shape of the through hole (4) is similar to a square or a triangle.

5. A component connection according to any one of claims 1 to 4,
**characterised in that** the two components (1, 3) are fixed immovably relative to one another in directions transverse to the insertion direction (6) in the region of the two fixing elements.

6. A component connection according to any one of claims 1 to 5,
**characterised in that** a further male fixing element (2b) is provided which partly or completely has the shape of a sphere or partly or completely has a shape similar to a sphere and which is introduced into an associated further female fixing element (4b) in a, or in the same insertion direction (6).

7. A component connection according to claim 6,
**characterised in that** the further female fixing element (4b) is formed by a slot or by an elongate through hole, in which the further male fixing element (2b) can be moved in a longitudinal direction of the slot or of the elongate through hole.

8. A component connection according to any one of claims 2 to 7,
**characterised in that** provided on an edge of the through hole (4, 4a, 4b) is at least one flexible clamping element (5, 5a, 5b, 5c) which projects from the second component (3) and which exerts from outside a clamping force, acting substantially transversely to the insertion direction (6), on an outer side of the male fixing element (2, 2a, 2b).

9. A component connection according to claim 8,
**characterised in that** the clamping element (5, 5a, 5b, 5c) engages behind the male fixing element (2, 2a, 2b).

10. A component connection according to either claim 8 or claim 9,
**characterised in that** the clamping element (5) is a clamping collar (5) which extends along the entire edge of the through hole (4).

11. A component connection according to either claim 8 or claim 9,
**characterised in that** provided along the edge of the through hole (5) is a plurality of clamping collars (5a, 5b, 5c) which are spaced apart from one another in the circumferential direction and which contact the male mixing element (2, 2a, 2b) from outside on a circumferential portion.

12. A component connection according to any one of claims 8 to 11,
characterised n that the clamping collar or the clamping collars (5, 5a, 5b, 5c) projects or project from the second component (3) in the insertion direction (6) or against the insertion direction (6).

13. A component connection according to any one of claims 1 to 12,
**characterised in that** the first and/or the second component is a sheet metal component, especially a steel or aluminium sheet metal component.

14. A component connection according to any one of claims 1 to 13,
**characterised in that** the first and/or the second component is a bodywork components.

15. A component connection according to any one of claims 2 to 14,
**characterised in that** the through hole (4, 4a, 4b) is punched out of the second component (3).

16. A component connection according to any one of claims 8 to 15,
**characterised in that** the at least one clamping collar (5, 5a, 5b, 5c) is a bent portion of the second component (3).

17. A component connection according to any one of claims 1 to 16,
**characterised in that** the male fixing element is an element which consists completely of metal, especially of steel or aluminium.

18. A component connection according to any one of claims 1 to 17,
**characterised in that** the two components (1, 3) are directly rigidly interconnected by a further connection, especially a welded connection, in addition to the at least one releasable clamping connection.

## Revendications

1. Assemblage de pièces comprenant :
- une première pièce (1), en particulier une première pièce de véhicule qui comporte un élément de fixation mâle (2) dépassant de celle-ci,
- une seconde pièce (3), en particulier une seconde pièce de véhicule (3) qui comporte un élément de fixation femelle (4, 5) prévu pour recevoir l'élément de fixation mâle (2), l'élément de fixation mâle (2) étant introduit dans l'élément de fixation femelle (4, 5) dans une direction d'introduction, assemblage dans lequel
- l'élément de fixation mâle (2) a la forme d'une sphère et présente une surépaisseur par rapport à l'élément de fixation femelle (4, 5) essentiellement transversalement à la direction d'introduction (6) de sorte que les deux pièces (1, 3) soient bloquées l'une par rapport à l'autre sur les éléments de fixation (2, 4, 5),
**caractérisé en ce que**
l'élément de fixation (2) comporte une tête fonctionnelle et une zone de base,
la zone de base est reliée par une liaison par la forme avec la première pièce (1), et
la zone de base est introduite à force dans la première pièce (1).

2. Assemblage de pièces conforme à la revendication 1,
**caractérisé en ce que**
l'élément de fixation femelle (4, 5) est formé par un perçage traversant (4) réalisé dans la seconde pièce (3).

3. Assemblage de pièces conforme à la revendication 2,
**caractérisé en ce que**
le perçage traversant (4) a une forme différente d'une forme circulaire.

4. Assemblage de pièces conforme à l'une des revendications 2 et 3,
**caractérisé en ce que**
la forme du perçage traversant (4) est similaire à un carré ou à un triangle.

5. Assemblage de pièces conforme à l'une des revendications 1 à 4,
**caractérisé en ce que**
les deux pièces (1, 3) sont fixées l'une à l'autre de façon à ne pas pouvoir être déplacées l'une par rapport à l'autre dans des directions transversales à la direction d'introduction (6) dans la zone des deux éléments de fixation.

6. Assemblage de pièces conforme à l'une des revendications 1 à 5,
**caractérisé en ce qu'**
il est prévu un autre élément de fixation mâle (2b) qui a partiellement ou en totalité la forme d'une sphère ou une forme similaire à une sphère et qui est introduit dans une direction d'introduction ou dans la même direction d'introduction (6) dans un autre élément de fixation femelle (4b) associé.

7. Assemblage de pièces conforme à la revendication 6,
**caractérisé en ce que**
l'autre élément de fixation femelle (4b) est formé par une fente ou par un perçage traversant longitudinal l'autre élément de fixation mâle (2b) pouvant être déplacé dans la direction longitudinale de cette fente ou de ce perçage traversant longitudinal.

8. Assemblage de pièces conforme à l'une des revendications 2 à 7,
**caractérisé en ce qu'**
il est prévu, sur un bord du perçage traversant (4, 4a, 4b) au moins un élément de blocage (5, 5a, 5b, 5c) élastiquement flexible dépassant de la seconde pièce (3) qui exerce à partir de l'extérieur une force de serrage agissant essentiellement transversalement à la direction d'introduction (6) sur la face externe de l'élément de fixation mâle (2, 2a, 2b).

9. Assemblage de pièces conforme à la revendication 8,
**caractérisé en ce que**
l'élément de blocage (5, 5a, 5b, 5c) s'engage à l'arrière de l'élément de fixation mâle (2, 2a, 2b).

10. Assemblage de pièces conforme à l'une des revendications 8 et 9,
**caractérisé en ce que**
l'élément de blocage (5) est constitué par une collerette de blocage (5) s'étendant le long de la totalité du bord du perçage traversant (4).

11. Assemblage de pièces conforme à l'une des revendications 8 ou 9,
**caractérisé en ce qu'**
il est prévu, le long du bord du perçage traversant (5) plusieurs collerettes de blocage (5a, 5b, 5c) situées à distance les unes des autres en direction périphérique et venant en contact à partir de l'extérieur sur un segment périphérique de l'élément de fixation mâle (2, 2a, 2b).

12. Assemblage de pièces conforme à l'une des revendications 8 à 11,
**caractérisé en ce que**
la ou les collerette(s) de serrage (5, 5a, 5b, 5c) dépasse(nt) de la seconde pièce (3) dans la direction d'introduction (6) ou dans la direction opposée à cette direction (6).

13. Assemblage de pièces conforme à l'une des revendications 1 à 12,
**caractérisé en ce que**
la première et/ou la seconde pièce(s) est(sont) constituée(s) par une(des) pièce(s) en tôle, en particulier par une(des) pièce(s) en tôle d'acier ou en tôle d'aluminium.

14. Assemblage de pièces conforme à l'une des revendications 1 à 13,
**caractérisé en ce que**
la première et/ou la seconde pièce(s) est(sont) une(des) pièce(s) de carrosserie.

15. Assemblage de pièces conforme à l'une des revendications 2 à 14,
**caractérisé en ce que**
le perçage traversant (4, 4a, 4b) est poinçonné sur la seconde pièce (3).

16. Assemblage de pièces conforme à l'une des revendications 8 à 15,
**caractérisé en ce que**
la(les) collerette(s) de blocage (5, 5a, 5b, 5c) est(sont) constituée(s) d'un(de) segment(s) recourbé(s) de la seconde pièce (3).

17. Assemblage de pièces conforme à l'une des revendications 1 à 16,
**caractérisé en ce que**
l'élément de fixation mâle est constitué par un élément entièrement réalisé en métal, en particulier en acier ou en aluminium.

18. Assemblage de pièces conforme à l'une des revendications 1 à 17,
**caractérisé en ce qu'**
en plus de la liaison amovible par blocage, les deux pièces (1, 3) sont en outre reliées directement solidairement l'une avec l'autre par une autre liaison, en particulier une liaison par soudage.
